# EUROPÄISCHE PATENTANMELDUNG

(11) **EP 0 841 084 A1**
(43) Veröffentlichungstag der Anmeldung: **13.05.1998**
(21) Anmeldenummer: 97118788.5
(22) Anmeldetag: 29.10.1997
(51) Int. Cl.: B01D 46/10, A47H 23/08, E06B 7/00

(54) **Pollenschutzfilter**

(30) Priorität: 09.11.1996 DE 19646363; 03.06.1997 DE 19723118; 16.07.1997 DE 19730433
(71) Anmelder: Beiersdorf Aktiengesellschaft, 20245 Hamburg (DE)
(72) Erfinder: Spies, Manfred, Dr., 35216 Biedenkopf (DE); Rademacher, Heike, 22179 Hamburg (DE); Kozaczka, Zygmut, 22299 Hamburg (DE); Papon, Klaus Eberhard, 22523 Hamburg (DE)

(57) **Zusammenfassung**

Verwendung eines luftdurchlässigen Filtermaterials, das mit einem klebenden oder haftenden Band an Fenster- oder Türrahmen appliziert wird zum Schutz vor dem Eintritt von Blütenpollen und Umweltschmutzteilchen, dadurch gekennzeichnet, daß das Filtermaterial aus einer Folie oder einem Gewebe besteht und Löcher mit einem Durchmesser von 2 - 250 µm aufweist.

## Beschreibung

Die Erfindung betrifft die Verwendung eines Filtermaterials, das mit einem klebenden oder haftenden System an Fenster oder Türen bzw. Fenster- oder Türrahmen appliziert werden kann, und vor dem Eintritt von Schwebeteilchen in der Luft in Wohnräume schützt.

Schwebeteilchen in der Umwelt, insbesondere Blütenpollen bereiten einer immer größer werdenden Gruppe der Bevölkerung gesundheitliche Probleme. Die Pollinosis ist eine allergische Reaktion, die vorzugsweise die Schleimhäute, die Augen und den Respirationstrakt betrifft. Die Symptome allergischer Reaktionen sind in der medizinischen Literatur hinreichend beschrieben ( Rötung der Augen, Tränenfluß, Niesen verbunden mit kopiosen Schleimsekretionen, allgemeines Krankheitsgefühl mit Schwäche, Abgeschlagenheit, Leistungsminderung, Frösteln und Frieren). Die allergischen Reaktionen sind desweiteren häufig an eine gesteigerte nervöse Erregbarkeit, die neurasthenischen Zustandsbildern ähnelt, und an eine erhöhte Empfindlichkeit gegen jede Art der Sinnesreizung, insbesondere optischer, akustischer aber auch vestibulärer Art gekoppelt. Die Heftigkeit der Erscheinungen kann bis zur völligen Arbeitsunfähigkeit führen. Allergiker versuchen sich daher in der Pollensaison, die in Mitteleuropa etwa von Ende März bis Ende August/Anfang September dauert, durch Aufenthalt in möglichst geschlossenen Räumen zu schützen.

Pollenschutzfilter für Lüftungssysteme in der Automobilindustrie sind hinreichend bekannt. Hierbei handelt es sich um relativ dicke, nicht transparente Filtermaterialien, die nach einer definierten Gebrauchszeit ausgetauscht werden müssen. Auch aus dem Gartenbaubereich sind Hauben zur Isolation von Pflanzen vor Fremdbefruchtung, wie in DD 286738 beschrieben, bekannt. DE 3409967 beschreibt eine Pollenschutzhaube als Kopfbedeckung , bei der Filtergewebe und Sichtfenster durch einen Klettverschluß miteinander verbunden sind, und Entlüftungsöffnungen in der Hutkrempe für die nötige Luftzirkulation sorgen. DE 3045723 beschreibt Gardinen, Filter, Netze und Siebe, die mittels Druckknöpfen an Fenster oder Türrahmen angebracht werden können, und so Schutz vor Umweltschmutz, Insekten und Blütenpollen gewährleistet.

Schwierigkeiten bei den Anwendungen im Fenster- und Türbereich allerdings macht die Abdichtung der Filtersysteme im Randbereich und die mangelhafte Transparenz. Aufgabe der Erfindung war es, hier Abhilfe zu schaffen, insbesondere einen Pollenschutzfilter für Wohnräume bzw. eine neue Möglichkeit der Applikation zu schaffen, der die Nachteile des Standes der Technik zumindest nicht in diesem Maße aufweist.

Gelöst wurde diese Aufgabe, durch Verwendung eines transparenten Filtermaterials mit kleinen Lochdurchmessern in Kombination mit einem haftenden Band, wie in den Patentansprüchen beschrieben.

### Filtermaterialien:

Als Filtermaterialien kommen insbesondere alle transparenten, nicht knisternde Folien in Betracht, die insbesondere durch Mikroperforation luftdurchlässig eingestellt werden können, insbesondere PVC, Polyurethan, Polyethylen, Polypropylen und entsprechende Copolymere. Polyester- und PMMA- Folien sind aufgrund der guten Transparenz ebenfalls geeignet, diese Folien haben jedoch den Nachteil, daß das Bewegen der Folien durch Zugluft zu störenden Geräuschen führt. Morphologisch betrachtet unterscheiden sich Pollen durch Größe, Gestalt, Feuchtigkeitsgehalt, Gewicht und Menge sowie Gehalt an spezifischen Antigenen. Die Größe der Pollenkörner reicht von 2-3 µm bis zu 250 µm, bei den meisten allergieerregenden Pflanzen liegt sie zwischen 20 und 45 µm.

Aufgrund dieser Gegebenheiten ist die Lochgröße, die bei der Mikroperforation eingestellt wird, vorteilhaft in einem Bereich von 2 bis 250 µm, bevorzugt 10 bis 50 µm liegen. Bei Mikroperforationen sind Lochgrößen von 2 - 70 µm realisierbar. Um einen optimalen Sauerstoffaustausch zu gewährleisten, sollte eine maximale Lochdichte gewählt werden ( bis 1,6 Mio. Poren/m² und mehr ). Die Mikroperforation kann über alle gängigen in der Literatur eingehend beschrieben Mikroperforationsmethoden erfolgen ( Hot- needles- Verfahren, Flüssigkeits- oder Gasstrahlverfahren, mit Ultraschall- oder Hochfrequenztechnik, mit Laserstrahltechnik oder mittels elektrostatischer Verfahren, vgl. auch W. Große, Kunststoffe 84. Jahrgang 1994/95 ).

Feinmaschige dünne Gewebe eignen sich ebenfalls als Filtermaterialien für Blütenpollen und haben den Vorteil, daß eine Reinigung über einen Waschgang möglich ist. Nachteilig ist hierbei jedoch die schlechtere Transparenz gegenüber volltransparenten Folien. Aus diesem Grunde eignet sich für Gewebe bevorzugt eine Applikation in der Art, daß man Türen oder Fenster in Kippstellung durch Verwendung eines beidseitig klebenden oder einseitig klebenden und einseitig haftenden Bandes beklebt, um darauf ein trapezförmig zugeschnittenes Filtermaterial fixieren zu können Bevorzugte Materialien für feinmaschige Gewebe sind Polyester und Polyamid. Die Größe der Maschen orientiert sich an den genannten Lochgrößen für geeignete mikroperforierte Folien.

Unter einem Gewebe ist hier auch zu verstehen ein Filtervlies, in zweiter Linie auch ein Filterfilz, mit Durchlässigkeitswerten, die dem Begriff 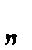 Löcher mit einem Durchmesser von 2 - 250 µm" entsprechen. Solche geeigneten Materialien sind z.B. Vliesstoffe der Firma Royalin GmbH. Mit dem Typ G 39 / 110 S auf Polyesterbasis mit Acrylbinder, der der Filterklasse EU 5 entspricht, lassen sich etwa 95% aller Partikel mit einer Teilchengröße von ≥ 10 µm abfiltern. Solche und ähnliche Produkte sind als Filtermaterialien ebenfalls gut geeignet.

Erfolgt die Applikation in der Art, daß von einem aus 2 Segmenten bestehenden Produkt ausgegangen wird wie in den Beispielen 4 und 5 beschrieben, kann bei Verwendung von Schrumpffolien für das nicht luftdurchlässige Segment, eine besonders gute Transparenz erzielt werden.

### Applikation:

Die Fixierung der Filtermaterialien an Türen und Fenstern bzw. an Türen- und Fensterrahmen erfolgt im Falle von Folien bevorzugt mit doppelseitig klebenden Klebebändern, die eine ausreichende Klebkraft und ein ausreichendes Massepolster besitzen müssen, sodaß das Filtermaterial dicht am Klebeband anliegt. Im Falle von Gewebe können auch einseitig klebende Klettbänder verwendet werden bei denen ein Austausch des Filtermaterials problemlos möglich ist, ohne daß auch das Fixierungsmaterial ausgetauscht werden muß.

Die beschriebenen Filtermaterialien können mit Hilfe der beschriebenen Fixierungsmaterialien entweder vollflächig in Türen oder Fensterrahmen oder als trapezförmige Fläche an Türen oder Fenster, die sich im gekippten Zustand befinden, und Türen- oder Fensterrahmen geklebt werden. Die beschriebene Applikationsmethode für gekippte Fenster eignet sich insbesondere dann, wenn Räume dauerhaft belüftet werden sollen und die Filtermaterialien nur eine mäßig gute Transparenz zeigen.

Erfindungsgemäß kann man auch nur einen Teil einer Fensterfläche ausrüsten, den anderen Teil aber vorzugsweise durch eine klare Folie verschließen, so daß die Transparenz des Gesamtsystems nicht nennenswert beeinträchtigt wird.

Im folgenden soll die Erfindung anhand von Ausführungsbeispielen beschrieben werden, ohne sie damit allerdings unnötig einschränken zu wollen.

### Beispiel 1

Eine 60 µm dicke glasklare PVC - Folie der Firma Hoechst ( Genotherm GE 15 ) wird mittels elektrostatischer Mikroperforation perforiert, sodaß der Lochdurchmesser 20 µm beträgt. Das mikroperforierte Material wird so zugeschnitten, daß es sich zwischen Fenster und Fensterrahmen einpassen läßt. ( 900 mm x 1600 mm ). In den Fensterrahmen wird tesafix 4902 in 19 mm Breite eingeklebt ( bei tesafix 4902 handelt es sich um ein doppelseitig klebendes Band, das sich einerseits sicher in Fensterrahmen einkleben und auch wieder entfernen läßt, und das anderseits Folien sicher fixiert). Die mikroperforierte Folie wird anschließend auf das Klebeband aufgeklebt. Im Hinblick auf die Verklebungsfestigkeit des Verbundes Fensterrahmen / Klebeband / Filterfolie erweist es sich als günstig, wenn man das Fenster nach Applikation etwa für 2 Stunden geschlossen hält. Mit der beschriebenen Pollenschutzfolie kann man verhindern, daß Blütenpollen mit einer Größe ≥ 20 µm in den Wohnraum eintreten können.

### Beispiel 2

Eine aus einem LD/HD- PE-Blend bestehende transparente vakuumgelochte Folie der Firma Tredegar ( Flexifilm S-6020025 ) wird auf das Maß eines Fensterinnenrahmens ( 900 mm x 900 mm ) zugeschnitten.

### Folieneigenschaften:

- Lochdurchmesser:: 100 µm
- Lochanzahl:: 644/cm²
- Offene Anteile:: 7 %
- Dicke vor Lochung:: 25 µm
- Dicke nach Lochung:: 205 µm
- Tragergewicht:: 23 g/m²

In den Fensterrahmen wird tesafix 4902 in 19 mm Breite eingeklebt, und die vakuumgelochte Folie darauf appliziert. Das beschriebene Filtermaterial gewährt Schutz gegen Blütenpollen und Schmutzpartikel mit einer Größe ≥ 100 µm.

### Beispiel 3

Ein teiltransparentes Polyamid- Siebgewebe der Firma Klein + Wieler mit einem Lochdurchmesser von 20 µm wird so zugeschnitten, daß eine trapezförmige Fläche entsteht, mit der der offene Teil eines gekippten Fensters in den Ausmaßen 900 mm x 1600 mm abgedeckt werden kann. Auf den äußeren Rand der Innenseite des Fensters und auf den inneren Rand der Innenseite des Fensterrahmens wird tesafix 4902 in 19 mm Breite aufgeklebt, und das feinmaschige Gewebe darauf fixiert Das Filtermaterial gewährt Schutz gegen Blütenpollen mit einer Größe ≥ 20 µm.

### Beispiel 4

Eine 145 µm dicke glasklare PU-Folie der Firma Wolf Walsrode Type VPT 2201 der Größe 1300 mm x 900 mm wird mit der schmalen Seite bündig auf ein teiltransparentes Polyamidgewebe der Firma Klein + Wieler (Lochdurchmesser 20 µm) der Größe 300 mm x 900 mm gelegt und mit einem Folienschweißgerät der Firma Kopp Typ SZ einseitig verschweißt.

In einem Fensterrahmen der Größe 900 mm x 1600 mm wird tesafix 4902 in 19 mm Breite eingeklebt (bei tesafix 4902 handelt es sich um ein doppelseitig klebendes Band, das sich einerseits sicher in Fensterrahmen einkleben läßt, und das andererseits Folien und Gewebe sicher fixiert).

Das verschweißte aus Folie und Gewebe bestehende Material wird anschließend auf das Klebeband so aufgeklebt, daß sich das Gewebestück am oberen Teil des Fensters befindet. Im Hinblick auf die Verklebungsfestigkeit des Verbundes Fensterrahmen / Klebeband / Filterfolie bzw. Gewebe erweist es sich als günstig, wenn man das Fenster nach Applikation etwa für 2 Stunden geschlossen hält.

Mit dem so aufgebauten Produkt kann, ohne nennenswerte Beeinträchtigung der Transparenz des Fensterglases, eine dauerhafte Belüftung von Wohnräumen gewährleistet werden, ohne daß Blütenpollen mit einer Größe ≥ 20 µm in den Wohnraum eintreten können.

### Beispiel 5

Eine 19 µm dicke Schrumpffolie der Firma Du Pont Type Clysar 75 ABLF der Größe 1300 mm x 900 mm wird mit der schmalen Seite bündig auf ein 300 mm x 900 mm großes Polyestervlies ( Filterklasse EU 5) Type G 39 / 110 S der Firma Royalin GmbH mit Hilfe eines tesafix 4902 (bei tesafix 4902 handelt es sich um ein doppelseitig klebendes Band, das sich einerseits sicher in Fensterrahmen einkleben läßt, und das andererseits Folien und Vlies sicher fixiert) aufgeklebt. In einem Fensterrahmen der Größe 900 mm x 1600 mm wird tesafix 4902 in 19 mm Breite in die Innenfalz eingeklebt. Das zusammengeklebte aus einer Schrumpffolie und Polyestervlies bestehende Material wird anschließend auf das Klebeband so aufgeklebt, daß sich das Polyestervlies am oberen Teil des Fensters befindet.
Mit einem herkömmlichen Heißluftfön kann die Folie faltenfrei appliziert werden. Im Hinblick auf die Verklebungsfestigkeit des Verbundes Fensterrahmen / Klebeband / Filterfolie bzw Polyestervlies erweist es sich als günstig, wenn man das Fenster nach Applikation etwa für 2 Stunden geschlossen hält. Mit dem so aufgebauten Produkt kann, bei hervorragender Transparenz, eine dauerhafte Belüftung von Wohnräumen gewährleistet werden, ohne daß Blütenpollen mit einer Größe ≥ 10 µm in den Wohnraum eintreten können.

## Patentansprüche

1. Verwendung eines luftdurchlässigen Filtermaterials, das mit einem klebenden oder haftenden Band an Fenster- oder Türrahmen appliziert wird zum Schutz vor dem Eintritt von Blütenpollen und Umweltschmutzteilchen, dadurch gekennzeichnet, daß das Filtermaterial aus einer Folie oder einem Gewebe besteht und Löcher mit einem Durchmesser von 2 - 250 µm aufweist.

2. Verwendung nach Anspruch 1 dadurch gekennzeichnet, daß man als Filtermaterial eine transparente oder teiltransparente luftdurchlässige Folie einsetzt.

3. Verwendung nach Anspruch 1 dadurch gekennzeichnet, daß man als Filtermaterial ein Gewebe einsetzt.

4. Verwendung nach Anspruch 1 dadurch gekennzeichnet, daß der Lochdurchmesser des Filtermaterials 10 - 50 µm beträgt.

5. Verwendung nach Anspruch 1 dadurch gekennzeichnet, daß das Filtermaterial mit einem doppelseitig klebenden Klebeband oder einem einseitig klebenden Klettband appliziert wird.

6. Verwendung nach Anspruch 1 dadurch gekennzeichnet, daß das Filtermaterial in rechteckiger Form in Tür oder Fensterrahmen angebracht wird, oder daß das Filtermaterial in trapezförmiger Form an Tür- oder Fensterrahmen und Türen oder Fenster in Kippstellung befestigt wird.

7. Verwendung nach Anspruch 1, dadurch gekennzeichnet, daß als Folie eine Schrumpffolie eingesetzt wird.

8. Pollenschutzfilter nach einem der Ansprüche 1 - 7 gekennzeichnet durch ein mittels eines klebenden oder haftenden Bandes appliziertes Filtermaterial an Türen oder Fenstern, das den Eintritt von allergieeregenden Pollen in den Wohnraum verhindert.
